Europäisches Patentamt

European Patent Office

Office européen des brevets

(11) Veröffentlichungsnummer : **0 325 189 B1**

(12) **EUROPÄISCHE PATENTSCHRIFT**

(45) Veröffentlichungstag der Patentschrift :
**01.04.92 Patentblatt 92/14**

(51) Int. Cl.⁵ : **F27B 7/22,** F26B 11/04,
F16C 13/04

(21) Anmeldenummer : **89100667.8**

(22) Anmeldetag : **16.01.89**

(54) Drehtrommel mit Laufring.

(30) Priorität : **18.01.88 DE 3801231**

(43) Veröffentlichungstag der Anmeldung :
**26.07.89 Patentblatt 89/30**

(45) Bekanntmachung des Hinweises auf die
Patenterteilung :
**01.04.92 Patentblatt 92/14**

(84) Benannte Vertragsstaaten :
**DE ES FR GB IT**

(56) Entgegenhaltungen :
**DE-A- 3 320 122**
**DE-A- 3 320 236**
**DE-A- 3 333 218**
**FR-A- 2 089 034**

(73) Patentinhaber : **KRUPP POLYSIUS AG**
**Graf-Galen-Strasse 17**
**W-4720 Beckum (DE)**

(72) Erfinder : **Kästingschäfer, Gerhard, Dipl.-Ing.**
**Kolpingstrasse 6**
**W-4724 Wadersloh (DE)**
Erfinder : **Peterwerth, Bernhard, Dipl.-Ing.**
**Auf der Wittenburg 32**
**W-4518 Bad Laer (DE)**
Erfinder : **Körting, Reinhard, Dipl.-Ing.**
**Amtmann-Brüning-Strasse 23a**
**W-4722 Ennigerloh (DE)**
Erfinder : **Auf dem Venne, Johannes, Dipl.-Ing.**
**Buchenweg 16a**
**W-4722 Ennigerloh (DE)**

(74) Vertreter : **Tetzner, Volkmar, Dr.-Ing. Dr. jur.**
**Van-Gogh-Strasse 3**
**W-8000 München 71 (DE)**

## Beschreibung

Die Erfindung betrifft eine Drehtrommel mit Laufring entsprechend dem Oberbegriff des Anspruchs 1.

Eine Laufringbefestigung, bei der die Unterlagsplatten mit dem Trommelmantel verschweißt sind, ist beispielsweise durch die DE-C 33 33 218 bekannt. Da der Mantel von Drehtrommeln oft hohen Temperaturen ausgesetzt ist, wobei zwischen dem Trommelmantel und den Unterlagsplatten des Laufringes große Wärmedehnungen auftreten können, ergeben sich bei der bekannten Ausführung hohe Beanspruchungen durch die zur mechanischen Belastung noch hinzukommenden thermischen Spannungen in den Schweißnähten, die die Unterlagsplatten mit dem Trommelmantel verbinden.

Aus der Praxis ist weiterhin eine Drehtrommel mit Laufring entsprechend dem Oberbegriff des Anspruches 1 bekannt. Hierbei sind die Unterlagsplatten lose zwischen dem Trommelmantel und dem Laufring angeordnet, wobei allerdings im Betriebszustand kein Spiel zwischen Ofen und Laufring vorhanden ist. Die zur Abstützung der Unterlagsplatten in Umfangsrichtung dienenden Halteelemente sind bei dieser bekannten Ausführung als gerade, längliche Klötze ausgebildet.

Der Erfindung liegt die Aufgabe zugrunde, eine Laufringbefestigung entsprechend dem Oberbegriff des Anspruches 1 so auszubilden, daß auch bei großen Temperaturdifferenzen zwischen Laufring und Trommelmantel eine einwandfreie Fixierung des Laufringes ohne unerwünscht hohe Beanspruchungen, insbesondere von Schweißnähten gewährleistet ist.

Diese Aufgabe wird erfindungsgemäß durch die kennzeichnenden Merkmale des Anspruches 1 gelöst. Zweckmäßige Ausgestaltungen der Erfindung sind Gegenstand der Unteransprüche.

Im Unterschied zu der vorstehend erwähnten bekannten Ausführung sind bei der erfindungsgemäßen Lösung auf den Unterlagsplatten keine Schweißverbindungen erforderlich. Dadurch können hochfeste Stähle mit geringer Schweißbarkeit eingesetzt werden.

Die losen Unterlagsplatten ermöglichen im kalten und warmen Betriebszustand der Drehtrommel ein über den gesamten Umfang annähernd gleichmäßiges Radialspiel, sodaß größere Temperaturdifferenzen zwischen Laufring und Trommelmantel ohne plastische Verformungen möglich sind. Die Unterlagsplatten aus hochfestem Stahl sind dabei in der Lage, die hohen dynamischen Belastungen bei permanentem radialen Spiel aufzunehmen.

Die X-förmig ausgebildeten Halteelemente sind so gestaltet, daß Spannungsspitzen im kritischen Schweißnahtanfang vermieden werden. Die X-Form der Halteelemente ergibt ferner eine erwünschte große Schweißnahtlänge.

Die Höhe der Halteelemente wird zweckmäßig größer als die Höhe der Unterlagsplatten gewählt, sodaß auch bei wechselndem Betriebsspiel eine volle Anlage sichergestellt ist.

Das bei der erfindungsgemäßen Laufringbefestigung vorgesehene Spiel hat keinen negativen Einfluß auf die Rundheit des Trommelmantels, erlaubt jedoch gegenüber den bisher bekannten Ausführungen die Aufnahme größerer Dehnungsdifferenzen durch Temperaturunterschiede zwischen Trommelmantel und Laufring. Die Gefahr von bleibenden Einschnürungen des Trommelmantels ist wesentlich gemindert.

Von besonderem Vorteil ist auch, daß die Einleitung der in Umfangsrichtung wirkenden Kräfte von den Unterlagsplatten auf die Halteelemente nicht in unmittelbarer Nähe des Anfangs der Schweißnähte erfolgt, sondern über den in Umfangsrichtung vorspringenden mittleren Bereich der Halteelemente, was eine erwünschte Entlastung des Schweißnahtanfanges mit sich bringt.

Ein Ausführungsbeispiel der Erfindung ist in der Zeichnung schematisch veranschaulicht. Es zeigen
Fig. 1 eine Teilaufsicht auf die zur Befestigung eines Laufringes auf einer Drehtrommel dienenden Teile,
Fig. 2 einen Schnitt längs der Linie II-II der Fig.1.

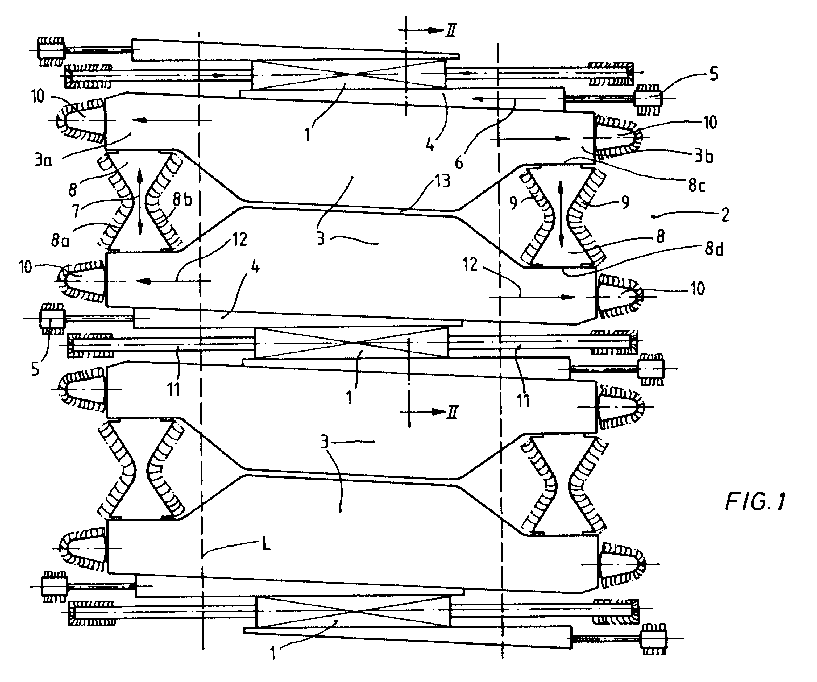

Fig. 1 zeigt (in einem Ausschnitt) eine Aufsicht auf die zur Befestigung eines Laufringes L auf einer Drehtrommel dienenden Teile. Von dem Laufring sind dabei lediglich drei Zähne 1 dargestellt, die am Innenumfang des Laufringes mit Abstand voneinander angeordnet sind.

Der Laufring stützt sich im Bereich zwischen den Zähnen 1 auf dem Trommelmantel 2 über Unterlagsplatten 3 ab, die sich im Bereich ihrer axialen Enden 3a, 3b etwas verjüngen.

Zwischen den Zähnen 1 und den Unterlagsplatten 3 sind Keile 4 vorgesehen, die über eine Spannvorrichtung 5 in axialer Richtung (Pfeil 6) gespannt werden können.

Die Unterlagsplatten 3 sind gegenüber dem Trommelmantel 2 lose angeordnet und stützen sich im Bereich ihrer axialen Enden 3a, 3b in Umfangsrichtung (Pfeil 7) an Haltelementen 8 ab, die X-förmig ausgebildet sind und im Bereich ihrer beiden nach innen gekrümmten Längsseiten 8a, 8b mit dem Trommelmantel 2 verschweißt sind.

Die beiden gegenüberliegenden Stirnseiten 8c, 8d der Halteelemente 8 springen im mittleren Bereich in Umfangsrichtung vor (die Randbereiche dieser Stirnseiten sind demgegenüber in Umfangsrichtung zurückgesetzt), wobei sich die Unterlagsplatten 3 an diesem vorspringenden Bereich der Halteelemente 8 abstützen.

Auf diese Weise sind die Anfangszonen der Schweißnähte 9, über die die Halteelemente 8 mit dem Trommelmantel 2 verbunden sind, von den durch die Unterlagsplatten 3 in die Halteelemente 8 eingeleiteten Kräften weitgehend entlastet.

Wie aus der Zeichnung ersichtlich ist, sind zwischen aufeinanderfolgenden Zähnen 1 jeweils zwei Unterlagsplatten 3 angeordnet, die sich im Bereich ihrer beiden axialen Enden an je einem für beide Unterlagsplatten gemeinsamen Halteelement 8 in Umfangsrichtung abstützen.

Zur axialen Lagesicherung der Unterlagsplatten 3 dienen Fixierungselemente 10, die mit dem Trommelmantel 2 verschweißt sind.

Zur axialen Lagesicherung des Laufringes sind ferner stangenförmige Abstützungen 11 vorgesehen, die mit ihrem einen Ende an den axialen Stirnseiten der Zähne 1 anliegen und deren anderes Ende mit dem Trommelmantel 2 verschweißst ist.

Im Betrieb ist bei unterschiedlichen Wärmedehnungen eine Relativbewegung zwischen den Unterlagsplatten 3 und dem Trommelmantel 2 in Richtung der Pfeile 12 möglich (die Fixierungselemente 10 gestatten ein ausreichendes Spiel). Auch in Umfangsrichtung ist durch das zwischen dem Hauptteil der beiden Unterlagsplatten vorhandene Spiel 13 der freie Ausgleich von Wärmedehnungen möglich. Die besonders kritischen Schweißnähte 9 der X-förmigen Halteelemente 8 sind spannungsmäßig wirksam entlastet.

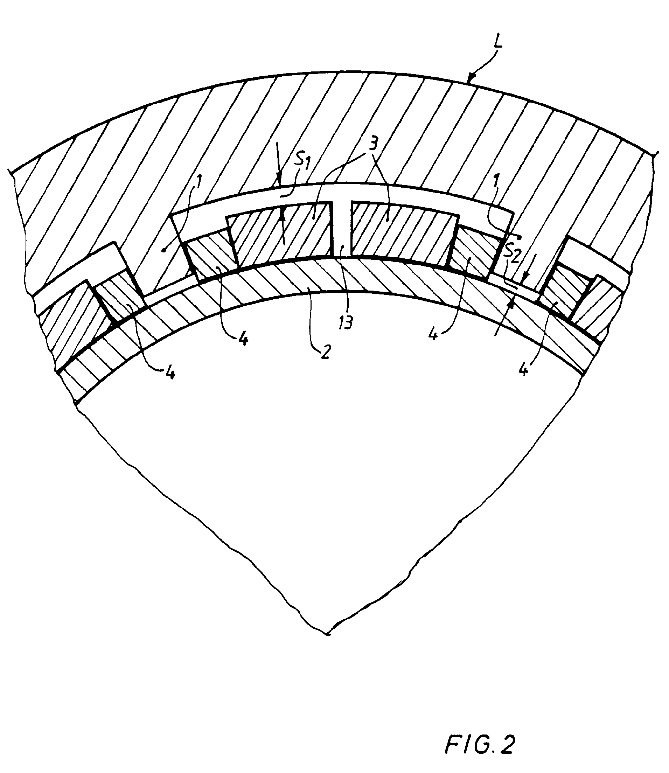

Die Schnittdarstellung gemäß Fig. 2 veranschaulicht (in vergrößertem Maßstab) die bezüglich des Radialspieles in der Laufringbefestigung vorgesehenen Verhältnisse. Zwischen den aus hochfestem Stahl geringer Schweißbarkeit bestehenden Unterlagsplatten 3 und dem Laufring L ist im kalten und warmen Betriebszustand der Drehtrommel ein über den gesamten Umfang annähernd gleichmäßiges Radialspiel $s_1$ vorhanden. Es beträgt zweckmäßig 1 bis 3 ‰ des Außendurchmessers des Trommelmantels 2 (im kalten Zustand).

Weiterhin ist ein Radialspiel $s_2$ zwischen den Zähnen 1 des Laufringes L und dem Trommelmantel 2 vorhanden. Dieses Radialspiel $s_2$ beträgt zweckmäßig 2 bis 4 ‰ des Außendurchmessers des Trommelmantels 2 (im kalten Zustand).

Wie Fig. 2 erkennen läßt, ist die Höhe der Keile 4 kleiner als die Höhe der Unterlagsplatte 3 gewählt. Zweckmäßig besteht insoweit ein Höhenunterschied von 2 bis 8 mm.

Die Höhe der (in Fig. 2 nicht sichtbaren) Halteelemente 8 ist zweckmäßig größer als die Höhe der Unterlagsplatten 3, und zwar vorzugsweise um 10 bis 50 mm, um auch bei einem wechselnden Betriebsspiel eine volle Anlage der Unterlagsplatten 3 an den Halteelementen 8 zu gewährleisten.

## Patentansprüche

1. Drehtrommel mit am Umfang angeordnetem Laufring (L), der an seinem Innenumfang mit Abstand voneinander vorgesehene Zähne (1) aufweist und sich auf dem Trommelmantel (2) über gegenüber dem Trommelmantel (2) lose angeordnete Unterlagsplatten (3) abstützt, die in Umfangsrichtung an mit dem Trommelmantel (2) verschweißten Halteelementen (8) anliegen, wobei in Umfangsrichtung zwischen den Zähnen (1) und Unterlagsplatten (3) Keile (4) vorgesehen sind und zwischen aufeinanderfolgenden Zähnen (1) jeweils zwei Unterlagsplatten (3) angeordnet sind, die sich im Bereich ihrer beiden axialen Enden (3a, 3b) an je einem für beide Unterlagsplatten gemeinsamen Halteelement (8) in Umfangsrichtung abstützen, wobei die Unterlagsplatten (3) an den beiden gegenüberliegenden Stirnseiten (8c, 8d) der Halteelemente (8) anliegen und die die beiden Stirnseiten miteinander verbindenden Längsseiten (8a, 8b) der Halteelemente mit dem Ofenmantel (2) verschweißt sind,

gekennzeichnet durch folgende Merkmale:

a) zwischen den aus hochfestem Stahl geringer Schweißbarkeit bestehenden Unterlagsplatten (3) und dem Laufring ist im kalten und warmen Betriebszustand der Drehtrommel ein über den gesamten Umfang annähernd gleichmäßiges Radialspiel ($s_1$) vorhanden;

b) mit dem Trommelmantel (2) sind zur axialen Lagesicherung der Unterlagsplatten (3) dienende Fixierungselemente(10) sowie zur axialen Lagesicherung des Laufringes dienende Abstützungen (11) verbunden;

c) die Halteelemente (8) sind - in Umfangsrichtung betrachtet - X-förmig ausgebildet, wobei die Stirnseiten (8c, 8d) der Halteelemente (8) im mittleren Bereich in Umfangsrichtung vorspringen und sich die Unterlagsplatten (3) an diesem vorspringenden Bereich der Halteelemente (8) abstützen.

2. Drehtrommel nach Anspruch 1, dadurch gekennzeichnet, daß das Radialspiel ($s_1$) zwischen den Unterlagsplatten (3) und dem Laufring (L) 1 bis 3 ‰ des Außendurchmessers des Trommelmantels (2) im kalten Zustand beträgt.

3. Drehtrommel nach Anspruch 1, dadurch gekennzeichnet, daß zwischen den Laufringzähnen (1) und dem Trommelmantel (2) ein Radialspiel ($s_2$) zwischen 2 und 4‰ des Außendurchmessers des Trommelmantels (2) im kalten Zustand vorgesehen ist.

4. Drehtrommel nach Anspruch 1, dadurch gekennzeichnet, daß die Höhe der Keile (4) kleiner, vorzugsweise 2 bis 8 mm kleiner, als die Höhe der Unterlagsplatten (3) ist.

5. Drehtrommel nach Anspruch 1, dadurch gekennzeichnet, daß die Höhe der Halteelemente (8) größer, vorzugsweise 10 bis 50 mm größer, als die Höhe der Unterlagsplatten (3) ist.


## Claims

1. Rotating drum with a bearing ring (L) which is arranged on the periphery, has teeth (1) spaced from one another on its inner periphery and is supported on the drum casing (2) by means of washers (3) which are loosely arranged opposite the drum casing (2) and in the peripheral direction butt against retaining elements (8) welded to the drum casing (2), and in which wedges (4) are provided in the peripheral direction between the teeth (1) and the washers (3), and two washers (3) in each case are arranged between successive teeth (1) and are each supported in the peripheral direction on a retaining element (8) which is common to both washers, the washers (3) butting against the two opposing end faces (8c, 8d) of the retaining elements (8) and the long sides (8a, 8b) of the retaining elements which connect the two end faces to one another being welded to the kiln casing (2),
characterised by the following features:
a) in the cold and hot operating state of the rotating drum there is an approximately uniform radial clearance ($s_1$) over the entire periphery between the washers (3) made from high-tensile steel of low weldability and the bearing ring;
b) fixing elements (10) which serve for axial securing of the position of the washers (3) and supports (11) which serve for axial securing of the position of the bearing ring are connected to the drum casing (1);
c) when viewed in the peripheral direction the retaining elements (8) are of X-shaped construction, and the end faces (8c, 8d) of the retaining elements (8) project in the central region in the peripheral direction and the washers (3) are supported on this projecting region of the retaining elements (8).

2. Rotating drum as claimed in claim 1, characterised in that the radial clearance ($s_1$) between the washers (3) and the bearing ring (L) is 1 to 3 ‰ of the external diameter of the drum casing (2) in the cold state.

3. Rotating drum as claimed in claim 1, characterised in that a radial clearance ($s_2$) between 2 and 4 ‰ of the external diameter of the drum casing (2) in the cold state is provided between the bearing ring teeth (1) and the drum casing (2).

4. Rotating drum as claimed in claim 1, characterised in that the height of the wedges (4) is smaller, preferably 2 to 8 mm smaller, than the height of the washers (3).

5. Rotating drum as claimed in claim 1, characterised in that the height of the retaining elements (8) is greater, preferably 10 to 50 mm greater, than the height of the washers (3).


## Revendications

1. Tambour rotatif à la circonférence duquel est disposée une bague de roulement (L) qui comporte sur la circonférence intérieure des dents (1) prévues à distance les unes des autres et qui prend appui sur l'enveloppe du tambour (2) par des selles d'assise (3) disposées librement par rapport à l'enveloppe du tambour (2) et appliquées dans la direction de la circonférence contre des éléments de retenue (8) soudés à l'enveloppe du tambour (2), des clavettes (4) étant prévues dans la direction de la circonférence entre les dents (1) et les selles d'assise (3) et deux selles d'assise (3) étant disposées dans chaque cas entre les dents successives (1) et prenant appui en direction circonférencielle à chacune de leurs deux extrémités axiales (3a, 3b) contre un élément de retenue (8) qui est commun aux deux selles d'assise, les selles d'assise (3) prenant appui contre les deux côtés extrêmes opposés (8c, 8c des éléments de retenue (8) et les côtés longitudinaux (8a, 8b) des éléments de retenue qui en relient les deux côtés extrêmes étant soudés à l'enveloppe du four (2),
caractérisé par les particularités suivantes :
a) un jeu radial ($S_1$) approximativement régulier sur la totalité de la circonférence existe entre les selles d'assise (3), qui sont en acier d'excellente qualité et ayant une faible aptitude au soudage, et la bague de roulement, à l'état de service du tambour rotatif à chaud et à froid ;
b) des éléments de fixation (10) destinés à l'arrêt des selles d'assise (3) à leur position axiale ainsi que des appuis (11) destinés à l'arrêt de la bague de roulement à sa position axiale sont reliés à l'enveloppe du tambour (2) ;
c) les éléments de retenues (8) sont en X -observés dans la direction de la circonférence-, la partie médiane des côtés extrêmes (8c, 8d) des éléments de retenue (8) étant saillante dans la direction de la circonférence et les selles d'assises prenant appui contre cette partie saillante des éléments de retenue (8).

2. Tambour rotatif selon la revendication 1, caractérisé en ce que le jeu radial ($S_1$) entre les selles d'assises (3) et la bague de roulement (L) correspond à 1 à 3 ‰ du diamètre extérieur de l'enveloppe du tambour (2) à l'état froid.

3. Tambour rotatif selon la revendication 1, caractérisé en ce qu'un jeu radial ($S_2$) prévu entre les dents (1) de la bague de roulement et l'enveloppe (2) du tambour correspond à une cote comprise entre 2 et 4 ‰ du diamètre extérieur de l'enveloppe du tambour (2) à l'état froid.

4. Tambour rotatif selon la revendication 1, caractérisé en ce que la hauteur des clavettes (4) est inférieure, de préférence de 2 à 8 mm, à la hauteur des selles d'assise (3).

5. Tambour rotatif selon la revendication 1, caractérisé en ce que la hauteur des éléments de retenue (8) est supérieure, de préférence de 5 à 50 mm, à la hauteur des selles d'assise (3).

FIG.1

EP 0 325 189 B1

FIG.2

7